# EUROPÄISCHE PATENTSCHRIFT

(11) **EP 3 256 311 B1**
(45) Veröffentlichungstag und Bekanntmachung des Hinweises auf die Patenterteilung: **21.08.2019**
(21) Anmeldenummer: 16709680.9
(22) Anmeldetag: 11.02.2016
(51) Int. Cl.: B30B 11/20, B30B 11/00

(54) **PELLETIEREINRICHTUNG**
PELLETING DEVICE
APPAREIL DE GRANULATION

(30) Priorität: 11.02.2015 AT 500992015
(43) Veröffentlichungstag der Anmeldung: 20.12.2017
(73) Patentinhaber: Josef Schaider Privatstiftung, 3430 Staasdorf (AT)
(72) Erfinder: SCHAIDER, Ludwig, 3430 Staasdorf (AT); SCHAIDER, Josef, 3430 Staasdorf (AT)
(74) Vertreter: Beer & Partner Patentanwälte KG
(86) Internationale Anmeldenummer: PCT/AT2016/050027
(87) Internationale Veröffentlichungsnummer: WO 2016/127196

(56) Entgegenhaltungen:
- EP-A1- 0 040 406
- EP-A1- 2 289 682
- WO-A1-81/02238
- BE-A- 672 992
- DE-A1- 2 701 426
- DE-B- 1 211 841
- SU-A1- 683 684
- SU-A1- 825 337
- US-A- 2 848 738
- US-A- 3 045 280
- US-A- 4 355 573

## Beschreibung

### Technisches Gebiet

Die Erfindung betrifft eine Pelletiereinrichtung, insbesondere für eine feldgeführte mobile Halmgut-Erntemaschine mit eingebauter Verbrennungskraftmaschine, z.B. mit einem Dieselmotor, einer Vorwärmung des von einem Häcksler zugeführten Halmgutes mit der Abwärme der Verbrennungskraftmaschine, einer Förderschnecke für das Halmgut und mit einer Pelletspresse, wobei die Verbrennungskraftmaschine einen Stromgenerator antreibt, der Antriebs- und Stellmotore über Schaltgeräte anspeist.

### Stand der Technik

Eine derartige Einrichtung ist aus dem Dokument: EP 2289682 A bekannt.

Biomasse ist ein nachwachsender Rohstoff und als Energieträger von Bedeutung. Allerdings ergeben sich für halmgutartige Biomasse, also beispielsweise Erntereste wie Stroh, und für Energiepflanzen wie Miscanthus, Rumex, Sida oder Riesenknöterich wirtschaftliche Probleme. Auf Grund des geringen Schüttgewichtes (Strohballen max. 130 kg/m³) übersteigen die Logistik-, Manipulations- und Herstellungskosten von verwertbaren Presslingen den wirtschaftlichen Nutzen, sodass auf konventionelle Energieträger ausgewichen wird. Dies ist bedauerlich, denn die meisten Energiepflanzen wachsen auf Böden, die für den nahrungsbegründenden Ackerbau qualitativ nicht geeignet sind. Die Energiepflanzen sind zumeist mehrjährig und Tiefwurzler, sodass die Saatkosten, z.B. innerhalb von 15 Jahren, nur einmal anfallen. Ferner sind diese Pflanzen äußerst robust und bedürfen kaum einer Düngung oder eines Pestizideinsatzes. Sie lagern im Boden CO₂ ein, zumal die Wurzeln in Tiefen bis 4 m reichen, und tragen somit zur Bodenverbesserung bei. Daher ist es ein Ziel, im Sinne einer nachhaltigen Energiepolitik eine technische Möglichkeit zu finden, die eine ökonomische Verwertung zur Energieumsetzung zulässt.

Man hat gemäß dem Patentdokument: US 5622037. erkannt, dass logistische Einsparungen dadurch erreichbar sind, dass die Verarbeitung zu Presslingen, also etwa für Pellets als Energieträger, unmittelbar auf dem Feld in einem Arbeitsgang direkt vor Ort erfolgt. Eine Erntemaschine im Ausmaß der in der US-Druckschrift geoffenbarten Art hat allerdings Anschaffungs- und Betriebskosten verursacht, die mit dem Ergebnis aus der dort eingesetzten Presse und den Antrieben nicht im Einklang standen. Das Dokument EP2289682 A offenbart eine Pelletiereinrichtung gemäß dem Oberbegriff des Anspruchs 1.

### Darstellung der Erfindung

Die Erfindung zielt daher darauf ab, eine Pelletiereinrichtung der oben beschriebenen Art hinsichtlich der Energiebilanz zu verbessern. Dies wird dadurch erreicht, dass die Pelletiereinrichtung die Merkmale des Anspruchs 1 aufweist. Der Stromgenerator muss daher nicht so leistungsstark sein wie gemäß der eingangs erwähnten Patentdokument EP 2289682 A. Der Dieselmotor ist bei einer konkreten Ausführungsform ausschließlich für die Verarbeitung der Biomasse vorgesehen. Er arbeitet mit konstanter Drehzahl infolge des anzutreibenden Stromgenerators. Um Leistungsschwankungen auszugleichen, wird die Einspritzmenge variiert. Nach der Erfindung ist eines der Schaltgeräte ein Regler für die Drehzahl der Förderschnecke. Alternativ zur Regelung auf Grund der Reaktionskräfte in der Presse ist es erfindungsgemäß zweckmäßig, wenn der Regler von der lastabhängig variabel eingespritzten Kraftstoffmenge des mit konstanter Drehzahl arbeitenden Dieselmotors geführt und der Antriebsmotor der Förderschnecke zur Speisung der Ringmatrizenpresse verkehrt proportional zur Einspritzmenge geregelt ist. Eine Erhöhung der Einspritzmenge bewirkt die Reduktion der Drehzahl der Förderschnecke. Wenn weniger Biomasse der Ringmatrizenpresse zugeführt wird, dann wird die Ringmatrizenpresse entlastet und der Dieselantrieb kann wieder mit reduzierter Einspritzmenge arbeiten.

Vorzugsweise ist die Kollerwalze als kreiszylindrische Hohlsiebwalze ausgebildet. Dadurch ist die Ringmatrizenpresse doppelt wirksam, da sowohl die Ringmatrize als auch die Kollerwalze Perforationen aufweisen und die Presslinge sowohl außen an der Mantelfläche der Ringmatrize als auch innen an der Zylinderfläche der Kollerwalze anfallen.

Die Baueinheit wird in zweckmäßiger Weise von einem Traktor gezogen, der frontseitig über einen Häcksler verfügt. Von diesem wird die zerkleinerte Biomasse über den Traktor hinweg mittels eines Gebläses der Pelletiereinrichtung zugeführt. Die Ringmatrizenpresse verfügt über Stellmotore, die über selbstsperrende Getriebe an parallelen Schwenkhebeln angreifen, die die Kollerwalze seitlich umgreifen und lagern und die in der Neigung zur Bestimmung des Kollerspaltes bezüglich der inneren Mantelfläche der Ringmatrize einstellbar sind. Die Konstruktion ermöglicht einen flachen Einzugswinkel in den Pressbereich. Dies ist vorteilhaft für Biomasse, infolge des geringen Schüttgewichts. Die Einstellung des Kollerspaltes erfolgt über einen Regler in Abhängigkeit vom Pressendruck, der durch Sensoren (piezoelektrische Elemente) an den Schwenkhebeln, beispielsweise an den Lagern, aufgenommen wird. Ferner ist es zweckmäßig, wenn die Schwenkhebel auf einem Sockel gelagert sind und dieser auch die Ringlager der Ringmatrize der Ringmatrizenpresse trägt und deren Reaktionskräfte aufnimmt. Dadurch wird der konstruktive Aufwand auf wenige Bauteile reduziert. Die Reaktionskräfte können gemessen und als Führungsgröße für die Regelung des Kollerspalts und der Menge der zugeführten Biomasse dienen.

Eine wesentliche Verbesserung des Gesamtwirkungsgrades ergibt sich, wenn die Biomasse schon vorverdichtet zur Pelletspresse kommt. Daher ist es zweckmäßig, wenn die Förderschnecke zur Vorverdichtung der Biomasse trichterförmige Gehäuseelemente aufweist, insbesondere in das Gehäuse im Inneren eingeschweißte und am Umfang verteilte Stäbe, die die Erzeugenden eines Kegelmantels bilden. Eine Schnecke in einem konisch zulaufenden Gehäuse ist aus dem Patentdokument US 3664097. an sich bekannt. Sie ist zur Montage an einem Rasenmäher bestimmt und soll das geschnittene Gras zu Pellets komprimieren.

Je nach der Art der Biomasse und des frontseitig am Traktor eingesetzten Häckslers kann noch ein Feinhäcksler einer Vorwärmung vor der Zuführung zur Pelletspresse vorgeschaltet sein.

Bei einer einfachen handelsüblichen Förderschnecke mit einer Schraubfläche innerhalb einer kreiszylindrischen Mantelfläche kann das Volumen des Zwischenraums zum Gehäuse der Schnecke zum Ausgang hin reduziert werden, indem die Stäbe am Umfang zum Ausgang hin konvergieren. Dadurch ergibt sich eine allmähliche Reduktion des im Umfangsspalt aufgenommenen Volumens an Biomasse in Förderrichtung und eine Vergrößerung der Materialdichte am Eingang der Pelletspresse.

Die erfindungsgemäße Pelletiereinrichtung kann unmittelbar auf den Feldern als Erntemaschine eingesetzt werden oder auch z.B. außerhalb der Erntezeit ohne Traktor völlig eigenständig im stationären Betrieb arbeiten (stand alone).

### Kurze Beschreibung der Zeichnungen

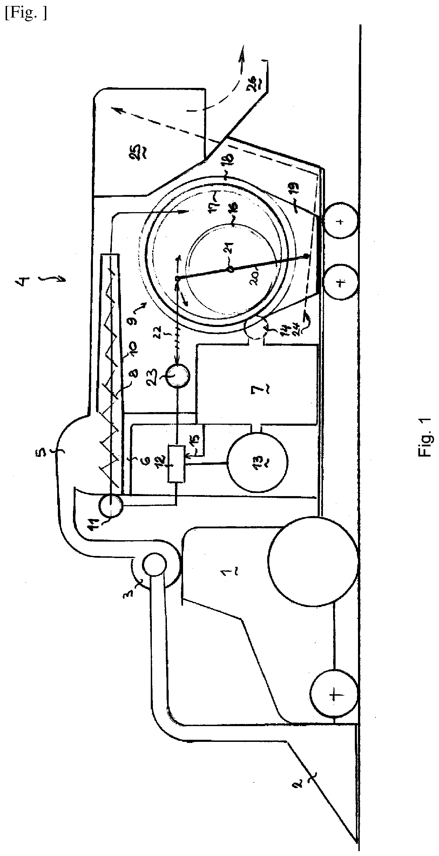

Ein Ausführungsbeispiel ist in der Zeichnung dargestellt. Sie zeigt schematisch den Aufbau einer Pelletiereinrichtung als Halmgut-Erntemaschine für den Einsatz unmittelbar auf dem Feld.

### Bester Weg zur Ausführung der Erfindung

Eine Zugmaschine, hier ein Traktor 1, ist frontseitig mit einem Häcksler 2 ausgestattet. Dieser schneidet und zerkleinert etwa Getreidestroh, Sonnenblumenstroh, Maispflanzen bzw. Maisstroh oder nur zum Zweck der Herstellung von Biomasse angepflanzte Bioprodukte ("Energiepflanzen") wie Riesenknöterich oder Miscanthus. Die zerkleinerte Biomasse gelangt über ein Gebläse 3 in eine vom Traktor 1 gezogene Erntemaschine 4. Diese weist - allenfalls im Anschluss an einen Feinhäcksler - einen Eingangsbereich als Trockenraum 5 auf, der über einen Wärmetauscher 6 etwa in Form einer zumindest teilweisen Ummantelung des Trockenraumes 5 verfügt. Der Wärmetauscher 6 steht mit einem Dieselmotor 7 in Verbindung, dessen Abwärme dem Wärmetauscher 6 zugeführt wird. Die im Trockenraum 5 zwischengelagerte gehäckselte Biomasse wird von einer Förderschnecke 8 ausgetragen und auf dem Weg zu einer Ringmatrizenpresse 9 komprimiert. Dazu ist entweder das Gehäuse 10 und bzw. oder die Schnecke selbst konisch ausgebildet. Es können auch Stäbe im Gehäuse 10 bei kreiszylindrischer Ausführung desselben im Inneren vorgesehen sein, die die Erzeugenden eines Kegelmantels bilden und zum Ausgang der Förderschnecke 8 hin konvergieren. Letztere verfügt über einen elektrischen Antriebsmotor 11, der über einen Regler 12 von einem Stromgenerator 13 gespeist wird. Der Antrieb des Stromgenerators 13 erfolgt mit konstanter Drehzahl über den Dieselmotor 7, der die Ringmatrizenpresse 9 über ein Getriebe 14 antreibt. Steigt die Last des Dieselmotors 7 infolge eines erhöhten Kraftbedarfs der Ringmatrizenpresse 9, dann wird zur Aufrechterhaltung der konstanten Drehzahl des Dieselmotors 7 mehr Kraftstoff eingespritzt. Dieser Verbrauch bildet die Führungsgröße für den Regler 12, wie durch den Pfeil 15 angedeutet. Bei zunehmender Einspritzmenge reduziert der Regler 12 die Drehzahl der Förderschnecke 8, sodass die Ringmatrizenpresse 9 mit weniger Biomasse beschickt und damit entlastet wird. Der Verbrauch des Dieselmotors 7 geht zurück.

Die Ringmatrizenpresse 9 arbeitet im Ausführungsbeispiel mit einer Kollerwalze 16, die hier ebenfalls als kreiszylindrische Hohlsiebwalze ausgebildet ist.

Die Ringmatrize 17 selbst ist randseitig jeweils in einem Haltering bzw. Ringlager 18 in der Art eines Wälzlagers gelagert, das von einem Sockel 19 gehalten wird. Dieser Sockel 19 nimmt ferner auch die Schwenklager eines Paares von parallel angeordneten Schwenkhebeln 20 auf, die die Ringmatrize 17 und die Kollerwalze 16 gabelförmig umfassen und die Kollerwalze 16 lagern (Lager 21). Mit den freien Enden der beiden Schwenkhebel 20 sind jeweils Spindeln 22 mit elektrischen Stellmotoren 23 verbunden, über welche der Kollerspalt zwischen Kollerwalze 16 und Ringmatrize 17 einstellbar ist. Bei zu hoher Presskraft können über den Regler 12 und die Stellmotoren 23 die Schwenkhebel 20 im Ausführungsbeispiel nach rechts geschwenkt und der Kollerspalt vergrößert werden. Weitere Kriterien für die Einstellung des Kollerspaltes sind die Beschaffenheit der anfallenden Biomasse (z.B. Stroh oder Holzspäne), deren Feuchtigkeit und die mechanische Qualität der Pellets.

Die sowohl aus dem Inneren der Kollerwalze 16 als auch außen an der Ringmatrize 17 im Bereich des Kollerspaltes anfallenden Pellets werden aufgefangen (Tasse 24) und mittels eines Gebläses oder eines Förderbandes in ein Silo 25 gefördert und gelangen nach Abruf in eine Ausgabe 26. Der Vorteil dieser Anordnung liegt in der kompakten Ausführung der Ringmatrizenpresse 9 mit dem Sockel 19 und den auf diesem gelagerten Schwenkhebeln 20 für die Kollerwalze 16 sowie in der Nutzung des Dieselmotors 7 als Pressenantrieb, aber auch als Generatorantrieb für die regelbaren Antriebs- und Stellmotoren 11 und 23. Wenn die Erntemaschine 4 nicht auf Feldern benützt wird, dann kann sie stationär und unabhängig von einem Traktor 1 und einem Häcksler 2 etwa mit Holzabfällen aus dem Wald oder mit anderen Abfallstoffen betrieben werden. Dies ist von großer Bedeutung in der Zeit, in der keine Feldpflanzen zur Pelletserzeugung zur Verfügung stehen. Auch die abgestellte Erntemaschine 4 ist voll betriebsfähig und kann aus zerkleinertem Holz bzw. klein geschredderten brennbaren Abfällen Pellets erzeugen.

## Patentansprüche

1. Pelletiereinrichtung, insbesondere für eine feldgeführte mobile Halmgut-Erntemaschine (4), mit eingebautem Dieselmotor (7), einer Vorwärmung des von einem Häcksler (2) zugeführten Halmgutes mit der Abwärme des Dieselmotors (7), einer Förderschnecke (8) für das Halmgut und mit einer Pelletspresse, wobei der Dieselmotor (7) einen Stromgenerator (13) antreibt, der Antriebs- und Stellmotore (11, 23) über Schaltgeräte anspeist, wobei der Dieselmotor (7) auch eine Ringmatrize (17) einer Ringmatrizenpresse (9) mit mindestens einer Kollerwalze (16) direkt antreibt **dadurch gekennzeichnet, dass** eines der Schaltgeräte ein Regler (12) für die Drehzahl der Förderschnecke (8) ist, der von der lastabhängig variabel eingespritzten Kraftstoffmenge des mit konstanter Drehzahl arbeitenden Dieselmotors (7) geführt ist und den Antriebsmotor (11) der Förderschnecke (8) zur Speisung der Ringmatrizenpresse (9) verkehrt proportional zur Einspritzmenge regelt.

2. Pelletiereinrichtung nach Anspruch 1, **dadurch gekennzeichnet, dass** die Kollerwalze (16) als kreiszylindrische Hohlsiebwalze ausgebildet ist.

3. Pelletiereinrichtung nach Anspruch 1 oder 2, **dadurch gekennzeichnet, dass** die Stellmotore (23) über selbstsperrende Getriebe an parallelen Schwenkhebeln (20) angreifen, die die Kollerwalze (16) seitlich umgreifen und lagern und die in der Neigung zur Bestimmung des Kollerspaltes bezüglich der inneren Mantelfläche der Ringmatrize (17) einstellbar sind.

4. Pelletiereinrichtung nach Anspruch 3, **dadurch gekennzeichnet, dass** die Schwenkhebel (20) auf einem Sockel (19) gelagert sind und dieser auch die Ringlager (18) der Ringmatrize (17) der Ringmatrizenpresse (9) trägt und deren Reaktionskräfte aufnimmt.

5. Pelletiereinrichtung nach einem der Ansprüche 1 bis 4, **dadurch gekennzeichnet, dass** die Förderschnecke (8) zur Vorverdichtung der Biomasse trichterförmige Gehäuseelemente aufweist, insbesondere in das Gehäuse (10) im Inneren eingeschweißte und am Umfang verteilte Stäbe, die die Erzeugenden eines Kegelmantels bilden.

## Claims

1. Pelleting device, in particular for a field-guided mobile stalk-crop harvesting machine (4) with a built-in diesel engine (7), a means for preheating the stalk material fed from a chopper (2) with the waste heat of the diesel engine (7), a screw conveyor (8) for the stalk material and with a pelleting device, whereby the diesel engine (7) drives a current generator (13), which feeds drive motors and servomotors (11, 23) via switch devices, wherein the diesel engine (7) also directly drives a ring die (17) of a ring die pelleting press (9) with at least one pan grinder roller (16), **characterized in that** a controller (12) for the speed of the screw conveyor (8) is one of the switch devices, which is governed by the load-dependent and variably-injected amount of fuel of the diesel engine (7) that operates at constant speed and regulates the drive motor (11) of the screw conveyor (8) inversely proportionally to the injection amount to feed the ring die pelleting press (9) .

2. Pelleting device according to claim 1, **characterized in that** the pan grinder roller (16) is designed as a circular-cylindrical hollow sieve roller.

3. Pelleting device according to claim 1 or 2, **characterized in that** the servomotors (23) engage via self-locking gears on parallel pivot levers (20), which laterally encompass and hold the pan grinder roller (16) and which can be adjusted in inclination to determine the roller gap relative to the inner lateral surface of the ring die (17).

4. Pelleting device according to claim 3, **characterized in that** the pivot levers (20) are mounted on a base (19), which also carries the annular bearing (18) of the ring die (17) of the ring die pelleting press (9) and receives its reaction forces.

5. Pelleting device according to one of claims 1 to 4, **characterized in that** the screw conveyor (8) has funnel-shaped housing elements for precompressing the biomass, in particular rods welded-in into the interior of the housing (10) and distributed on the periphery, which rods form the generatrix of a cone envelope.

## Revendications

1. Installation de pressage de granulés, en particulier pour une faucheuse de tiges mobile tractée (4), avec un moteur diesel intégré (7), un préchauffage des tiges fauchées amenées à une hacheuse (2) avec la chaleur dégagée par le moteur diesel (7), un convoyeur à vis (8) pour les tiges fauchées et une presse à granulés, dans laquelle le moteur diesel (7) entraîne un générateur électrique (13) qui alimente des moteurs d'entraînement et des servomoteurs (11, 23) par l'intermédiaire d'organes de commutation, dans laquelle le moteur diesel (7) entraîne aussi directement une filière annulaire (17) d'une presse à filière annulaire (9) avec au moins un rouleau de presse (16), **caractérisée en ce que** l'un des organes de commutation est un régulateur (12) pour réguler la vitesse de rotation du convoyeur à vis (8), qui est piloté par la quantité variable de carburant injectée en fonction de la charge dans le moteur diesel (7) fonctionnant à une vitesse de rotation constante et qui régule le moteur d'entraînement (11) du convoyeur à vis (8) pour alimenter la presse à filière annulaire (9) de manière inversement proportionnelle à la quantité injectée.

2. Installation de pressage de granulés selon la revendication 1, **caractérisée en ce que** le rouleau de presse (16) est conformé comme un cylindre creux perforé.

3. Installation de pressage de granulés selon la revendication 1 ou 2, **caractérisée en ce que** les servomoteurs (23) se mettent en prise par l'intermédiaire d'engrenages autobloquants sur des leviers pivotants (20) parallèles qui entourent le rouleau de presse (16) latéralement et le supportent et dont l'inclinaison peut être réglée pour déterminer l'espace de pressage par rapport à la surface d'enveloppe intérieure de la filière annulaire (17).

4. Installation de pressage de granulés selon la revendication 3, **caractérisée en ce que** les leviers pivotants (20) sont supportés sur un socle (19) et celui-ci porte aussi les paliers annulaires (18) de la filière annulaire (17) de la presse à filière annulaire (9) et absorbe leurs forces de réaction.

5. Installation de pressage de granulés selon l'une des revendications 1 à 4, **caractérisée en ce que** le convoyeur à vis (8) présente, pour pré-compacter la biomasse, des éléments de capot en forme d'entonnoir, en particulier des barres soudées à l'intérieur du capot (10) et réparties sur sa circonférence, qui forment la génératrice d'une enveloppe conique.
